# EUROPÄISCHE PATENTSCHRIFT

(11) **EP 3 094 862 B1**
(45) Veröffentlichungstag und Bekanntmachung des Hinweises auf die Patenterteilung: **28.03.2018**
(21) Anmeldenummer: 15701696.5
(22) Anmeldetag: 13.01.2015
(51) Int. Cl.: F03D 13/00, F03D 1/00, F03D 7/02, B66C 23/88, F03D 80/00, F03D 80/50

(54) **VORRICHTUNG MIT EINER WINDENERGIEANLAGE UND EINEM KRAN**
APPARATUS COMPRISING A WIND TURBINE AND A CRANE
DISPOSITIF COMPORTANT UNE ÉOLIENNE ET UNE GRUE

(30) Priorität: 17.01.2014 DE 102014000652
(43) Veröffentlichungstag der Anmeldung: 23.11.2016
(73) Patentinhaber: Senvion GmbH, 22297 Hamburg (DE)
(72) Erfinder: OBERMÜLLER, Ronny, 18273 Güstrow (DE)
(74) Vertreter: Glawe, Delfs, Moll
(86) Internationale Anmeldenummer: PCT/EP2015/050492
(87) Internationale Veröffentlichungsnummer: WO 2015/107045

(56) Entgegenhaltungen:
- EP-A1- 2 674 384
- KR-A- 20130 026 794
- US-A1- 2011 219 615

## Beschreibung

Die Erfindung betrifft eine Vorrichtung nach dem Oberbegriff des Anspruchs 1 und ein Verfahren nach dem Oberbegriff des Anspruchs 9.

Die Rotoren heutiger Windenergieanlagen sind üblicherweise in weiten Azimutbereichen, meist 360°, winkelverstellbar, um den Rotor optimal in den Wind ausrichten zu können. Wenn sich jedoch in der Nähe ein Kran befindet, etwa ein Servicekran wie häufig bei Offshore-Windenergieanlagen, droht eine Kollision zwischen dem Rotor und dem im Betrieb befindlichen Kran. Denn während des Betriebs des Krans soll die Energieerzeugung möglichst nicht unterbrochen werden. Um solche Kollisionen zu vermeiden, sind im Stand der Technik Höhen- und/oder Schwenkbegrenzungen für den Kran vorgesehen. Diese sind jedoch meist überbrückbar ausgeführt, so dass die Kollisionsvermeidung regelmäßig vom Geschick der Bedienpersonen abhängt.

Beispiele aus dem Stand der Technik sind aus US20110219615 und EP2674384 bekannt. Der Erfindung liegt die Aufgabe zugrunde, diese Abhängigkeit vom Geschick der Bedienpersonen zu verringern oder auszuschalten und gleichzeitig den Betrieb von Windenergieanlage und Kran so wenig wie möglich einzuschränken. Sie löst diese Aufgabe durch die Merkmale der Ansprüche 1 und 12. Die Merkmale der Unteransprüche betreffen vorteilhafte Weiterbildungen der Erfindung.

Soweit von einem um eine horizontale Achse drehbaren Rotor die Rede ist, ist eine im Wesentlichen horizontale Achse gemeint, bei der eine optimale Windausnutzung es erfordert, dass der Rotor in den Wind gedreht wird. Dies geschieht um eine vertikale Achse, worunter ebenfalls eine im Wesentlichen vertikale Achse zu verstehen ist, die bevorzugt parallel zur Längsrichtung des Turms verläuft. Der vollständige Azimutbereich deckt vorzugsweise 360° ab, denkbar sind aber auch kleinere Winkelbereiche. Bevorzugt ist ein Motor zur Einstellung der Winkelstellung im vollständigen Azimutbereich vorgesehen. Nicht ausgeschlossen ist, dass der vollständige Azimutbereich einstellbar ist, etwa um aus anderen Gründen als einer Kollisionsgefahr mit dem Kran die Bewegungsfreiheit der Windenergieanlage gezielt einzuschränken.

Der Rotor umfasst vorzugsweise zwei oder drei Rotorblätter. Vorzugsweise ist das Lager zusammen mit dem Rotor gegenüber dem Turm drehbar. Windenergieanlage und Kran sind bevorzugt auf einer Offshore-Plattform angeordnet.

Ein erfindungsgemäßer Kran umfasst ein oder mehrere Lasttragmittel, die direkt oder indirekt über andere Lasttragmittel in einem Kranfundament verankert sind. Zumindest eines der Lasttragmittel ist gegenüber dem Fundament derart beweglich, dass die Höhe des Krans veränderlich ist. Bevorzugt umfassen die Lasttragmittel einen Ausleger, der am oberen Ende einer im Fundament verankerten Kransäule um eine horizontale Achse schwenkbar gelagert und mit der Säule oder gegenüber dieser um eine vertikale Achse drehbar ist.

Unter einer Stellung des Krans ist die Gesamtheit der Positionen aller beweglichen Lasttragmittel relativ zum Fundament zu verstehen. Ein Parkmodus ist eine Stellung, in der der Kran nicht zum Betrieb bestimmt ist oder nur solche Betriebsstellungen einnehmen kann, in denen eine Kollision mit dem Rotor in jeder Winkelstellung des vollständigen Azimutbereichs ausgeschlossen ist. Dementsprechend können auch mehrere Parkmodi vorgesehen sein.

Ein Betriebsmodus ist ein Bereich verschiedener Betriebsstellungen, d.h. Stellungen, die der Kran bei Betrieb einnehmen kann. Die Erfindung befasst sich mit solchen Kranen, die so nahe an der Windenergieanlage angeordnet und so beweglich sind, dass es wenigstens einen Betriebsmodus gibt, der zumindest eine Kollisionsstellung enthält, in der der Rotor in zumindest einer Winkelstellung des vollständigen Azimutbereichs mit dem Kran kollidieren kann. Im einfachsten Fall umfasst der Betriebsmodus sämtliche mögliche Stellungen des Krans.

Eine erfindungsgemäße Steuerung schränkt den Azimutbereich für den Rotor automatisch ein. Generell gilt, soweit die Erfindung bestimmte Maßnahmen einer Steuerung zuweist, dass diese Maßnahmen von der Steuerung automatisch ergriffen werden. Ebenso ist für die in den Ansprüchen 12 ff. enthaltenen Verfahrensschritte eine automatische Ausführung bevorzugt. Die Steuerung arbeitet vorzugsweise elektronisch, zwingend ist dies jedoch nicht. Unerheblich ist, ob die Steuerung an einem Ort oder verteilt angeordnet ist. Die erfindungsgemäße Sicherungseinrichtung kann ausschließlich aus der Steuerung bestehen oder auch weitere Komponenten umfassen.

Die Einschränkung des Azimutbereichs geschieht bevorzugt über mechanische oder elektrische Bremsmittel für die Drehbewegung um die vertikale Achse, die ab bestimmten Winkelstellungen wirksam werden. Denkbar sind auch ein oder mehrere Anschläge mit einstellbarer Winkelposition.

Vorteilhafterweise ist der eingeschränkte Azimutbereich derart bemessen, dass es in keiner der Betriebsstellungen des Krans in dem Betriebsmodus zu einer Kollision mit dem Rotor kommen kann. In diesem Fall ist jegliche Abhängigkeit der Kollisionsvermeidung vom Geschick der Bedienperson ausgeschaltet.

Bevorzugt wird geprüft, ob der Kran in den Betriebsmodus gelangt. Entsprechend ist die Steuerung eingerichtet, zu prüfen, ob der Kran in einen Betriebsmodus gelangt. Diese automatische Prüfung erhöht die Betriebssicherheit.

In diesem Fall ist es besonders vorteilhaft, wenn anhand eines elektrischen Parameters eines elektrischen Antriebs des Krans geprüft wird, ob der Kran in den Betriebsmodus gelangt. Entsprechend weist der Kran der erfindungsgemäßen Vorrichtung für seinen Betrieb mindestens einen elektrischen Antrieb auf und ist die Steuerung ist so eingerichtet, um die Prüfung, ob der Kran in den Betriebsmodus gelangt, anhand eines elektrischen Parameters des elektrischen Antriebs vorzunehmen. In diesem Fall bedarf es keiner Schnittstelle zwischen der erfindungsgemäßen Steuerung und einer Bewegungssteuerung des Krans. Damit kann die Erfindung unabhängig vom konkreten Krantyp umgesetzt werden, und im Fall eines Wechsels des Krantyps sind keinerlei Anpassungen der jeweiligen Steuerungen erforderlich. Als Parameter kommen insbesondere die vom Kran abgenommene elektrische Leistung oder die Stromstärke in Betracht. Sofern der Kran mehrere Antriebe aufweist, wird der Parameter vorzugsweise aus der von allen Antrieben gemeinsam aufgenommenen Leistung bzw. Stromstärke gebildet. Es ist allerdings unschädlich, wenn, etwa aus Sicherheitsgründen, auch anderweitige Parameter in die Prüfung einfließen.

Vorteilhafterweise stammt die elektrische Energie zum Betrieb des elektrischen Antriebs von der Windenergieanlage. Im Fall mehrerer Antriebe des Krans gilt dies bevorzugt für alle Antriebe, weiter bevorzugt für die gesamte Elektrik des Krans einschließlich seiner Bewegungssteuerung. In diesem Fall ist ein autarker Betrieb des Krans möglich, und die Vorteile der Erfindung, einen gleichzeitigen und reibungslosen Betrieb von Windenergieanlage und Kran zu ermöglichen, treten besonders zutage.

Bevorzugt wird die Einschränkung des Azimutbereichs aufgehoben, wenn der Kran in einen Parkmodus gelangt. Dementsprechend ist bei der erfindungsgemäßen Vorrichtung die Steuerung bevorzugt eingerichtet, die Einschränkung des Azimutbereichs aufzuheben, wenn der Kran in einen Parkmodus gelangt. Indem die Steuerung somit die Freigabe des vollständigen Azimutbereichs übernimmt, erübrigt sich eine manuelle Freigabe. Die Prüfung, ob ein Parkmodus eingenommen ist, kann wiederum durch Erfassung eines Parameters eines oder mehrerer der elektrischen Antriebe des Krans erfolgen, zusätzlich oder stattdessen z.B. auch optisch über Lichtschranken oder Bilderfassung.

Vorteilhafterweise ist für den Kran ein Zweitbetriebsmodus vorgesehen, der einen Bereich von Zweitbetriebsstellungen umfasst, unter denen zumindest eine Zweitkollisionsstellung ist, die sich von sämtlichen Betriebsstellungen des ersten Betriebsmodus unterscheidet und bei der der Kran mit dem Rotor in zumindest einer Winkelstellung des vollständigen Azimutbereichs kollidieren kann. In diesem Fall wird beim Eintritt in den Zweitbetriebsmodus der Azimutbereich gegenüber dem vollständigen Azimutbereich so eingeschränkt, dass es in keiner möglichen Zweitbetriebsstellung des Krans in dem Zweitbetriebsmodus zu einer Kollision mit dem Rotor kommen kann. Bei der erfindungsgemäßen Vorrichtung ist die Steuerung dementsprechend eingerichtet, den Azimutbereich in dieser Weise einzuschränken. Der Kran kann bei dieser Ausgestaltung flexibler eingesetzt werden. Denkbar ist, dass der Zweitbetriebsmodus einen Teilbereich der Betriebsstellungen des ersten Betriebsmodus umfasst, etwa wenn der Kran für kompaktere Lasten in geringerer Höhe arbeiten kann. Denkbar ist aber auch, dass die Betriebsstellungen des einen Betriebsmodus gänzlich andere sind als die des Zweitbetriebsmodus, so etwa wenn der Kran an einer Ecke einer Offshore-Plattform angeordnet ist und je nach Ausrichtung des anliegenden Versorgungsschiffs verschiedene Winkelbereiche abfährt. In entsprechender Weiterbildung sind neben dem ersten und dem Zweitbetriebsmodus auch weitere Betriebsmodi denkbar. Es können Begrenzungsmittel vorgesehen sein, die ausschließen, dass der Kran unbeabsichtigt von einem Betriebsmodus in einen anderen gelangt, etwa einstellbare Anschläge oder Bremsmittel für einige oder alle Lasttragmittel. Denkbar ist aber auch eine softwareseitige Lösung, bei der die Auswahl eines Betriebsmodus dazu führt, dass die Antriebe, etwa Servomotoren, nur den zu diesem Modus gehörigen Bereich an Betriebsstellungen abfahren können.

Vorteilhafterweise wird die Winkelstellung des Rotors im vollständigen oder einem eingeschränkten Azimutbereich erfasst und in Abhängigkeit davon das Umschalten des Krans in einen Betriebsmodus, für den es zumindest eine Kollisionsstellung mit der erfassten Winkelstellung gibt, unterbunden. Entsprechend ist bei der erfindungsgemäßen Vorrichtung die Steuerung eingerichtet, die Winkelstellung des Rotors im vollständigen oder einem eingeschränkten Azimutbereich zu erfassen und in Abhängigkeit davon das Umschalten des Krans in einen Betriebsmodus, für den es zumindest eine Kollisionsstellung mit der erfassten Winkelstellung gibt, zu unterbinden. Hierdurch wird zum einen verhindert, dass der Kran gerade dann in Betrieb genommen wird, wenn der Rotor in einer Position ist, in der eine unmittelbare Kollisionsgefahr besteht. Im Fall mehrerer vorgesehener Betriebsmodi des Krans wird zum anderen unterbunden, dass eine Umschaltung in einen kollisionskritischen Modus erfolgt. Die Vorrichtung kann dann möglichst flexibel und zugleich möglichst gefahrlos betrieben werden. Bevorzugt erfolgt die Einschränkung des Azimutbereichs nicht nur für die konkrete Winkelstellung, sondern auch für benachbarte Winkelstellungen innerhalb eines Toleranzbereichs, so dass auch von kurzfristigen Änderungen der Winkelstellung keine Gefahr ausgeht.

Im vorgenannten Fall ist es weiter vorteilhaft, wenn der Rotor während des Unterbindens des Umschaltens des Krans in den Betriebsmodus mit der Kollisionsstellung in eine Winkelstellung gedreht wird, die innerhalb eines Azimutbereichs liegt, in dem Kollisionen mit dem Kran in dem Betriebsmodus ausgeschlossen sind. Entsprechend weist bei der erfindungsgemäßen Vorrichtung die Windenergieanlage einen Drehantrieb zum Drehen des Rotors in eine bestimmte Winkelstellung innerhalb des vollständigen oder eines eingeschränkten Azimutbereichs auf, und die Steuerung ist weiter eingerichtet, während des Unterbindens des Umschaltens des Krans in den Betriebsmodus mit der Kollisionsstellung den Rotor mittels des Drehantriebs in eine Winkelstellung zu drehen, die innerhalb eines Azimutbereichs liegt, in dem Kollisionen mit dem Kran in dem Betriebsmodus ausgeschlossen sind. Hierdurch kann der Rotor, wenn er sich in dem Moment, in dem eine Inbetriebnahme des Krans gewünscht ist, in einer kollisionskritischen Winkelstellung befindet, selbsttätig aus dieser herausgedreht werden.

Im letztgenannten Fall ist es überdies vorteilhaft, wenn nach dem Drehen des Rotors in die Winkelstellung der Azimutbereich so eingeschränkt wird, dass es in keiner der Betriebsstellungen des Krans in dem Betriebsmodus zu einer Kollision mit dem Rotor kommen kann, und die Unterbindung des Umschaltens des Krans in den Betriebsmodus aufgehoben wird. Entsprechend ist bei der erfindungsgemäßen Vorrichtung die Steuerung ferner eingerichtet, nach dem Drehen des Rotors in die Winkelstellung den Azimutbereich so einzuschränken, dass es in keiner der Betriebsstellungen des Krans in dem Betriebsmodus zu einer Kollision mit dem Rotor kommen kann, und die Unterbindung des Umschaltens des Krans in den Betriebsmodus aufzuheben. In diesem Fall wird selbsttätig dafür gesorgt, dass der Kran möglichst schnell, aber ohne Kollision den gewünschten Betrieb aufnehmen kann.

Ferner ist es vorteilhaft, wenn die Bewegungsfreiheit des Krans in Abhängigkeit von einer bevorzugten Winkelstellung des Rotors im Azimutbereich eingeschränkt wird, so dass dieser nur in einem bestimmten von mehreren Betriebsmodi betrieben werden kann. Bei der erfindungsgemäßen Vorrichtung umfasst entsprechend die Sicherungseinrichtung Begrenzungsmittel zum Einschränken der Bewegungsfreiheit des Krans, so dass dieser nur in einem bestimmten von mehreren Betriebsmodi betrieben werden kann, und Mittel zur Bestimmung einer bevorzugten Winkelstellung des Rotors im Azimutbereich sowie eine Einstelleinrichtung zur Einstellung der Begrenzungsmittel in Abhängigkeit von der bevorzugten Winkelstellung vorgesehen sind. Die Abhängigkeitsprüfung kann von der Steuerung übernommen werden. Die bevorzugte Winkelstellung kann vorteilhafterweise die Windrichtung sein oder auch eine davon abweichende Sollstellung für den Rotor. Mit dieser Weiterbildung der Erfindung lässt sich eine möglichst gute Windausnutzung mit einer größtmöglichen Flexibilität des Kranbetriebs kombinieren. Die bevorzugte Winkelstellung kann auch ein Bereich an Winkelstellungen sein, etwa wenn die Windenergieanlage in einem Trudelbetrieb läuft. Die Begrenzungsmittel werden dann entsprechend so eingestellt, dass es in keiner Winkelstellung des Bereichs zu einer Kollision zwischen Rotor und Kran kommen kann. In die Bestimmung des Bereichs kann auch die Windstärke einfließen, die die Steuerung mittels eines Anemometers misst.

Nachfolgend wird ein Ausführungsbeispiel der Erfindung anhand von Zeichnungen erläutert. Es zeigen
- Fig. 1:: eine schematische Seitenansicht einer Vorrichtung nach dem Stand der Technik;
- Fig. 2:: einen vergrößerten Ausschnitt aus Fig. 1;
- Fig. 3:: eine schematische Draufsicht auf eine erfindungsgemäße Vorrichtung;
- Fig. 4:: die gleiche Ansicht wie in Fig. 3 mit eingeschränktem Azimutbereich;
- Fig. 5:: die gleiche Ansicht wie in Fig. 4 mit weniger weit eingeschränktem Azimutbereich;
- Fig. 6:: eine Teilansicht von Fig. 3 bis 5 mit weiteren Details zur Steuerung;
- Fig. 7:: ein Flussdiagramm zur Veranschaulichung einer möglichen Arbeitsweise der Erfindung.

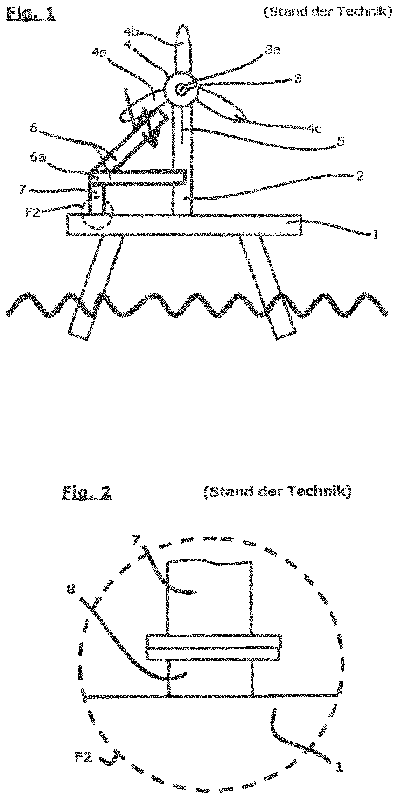

In Fig. 1 sieht man eine schwimmende Offshore-Plattform 1, auf der ein vertikaler Turm 2 einer Windenergieanlage befestigt ist. Am oberen Ende des Turms 2 befindet sich ein Lager 3, in dem sich ein Rotor 4 mit drei Rotorblättern 4a, 4b und 4c um eine horizontale Achse 3a dreht. Das Lager 3 ist mit dem Rotor 4 um eine vertikale Achse 5 gegenüber dem Turm 2 drehbar.

Auf der Plattform 1 ist außerdem ein Kran umfassend einen Ausleger 6 und eine Kransäule 7 befestigt. Diese Befestigung erfolgt über ein von der Plattform 1 abragendes Kranfundament 8. Fig. 2 zeigt hierzu in vergrößerter Darstellung den in Fig. 1 mit dem gestrichelten Kreis F2 umrandeten Bereich.

Der Ausleger 6 des Krans ist am oberen Ende der Kransäule 7 so gelagert, dass er um eine horizontale Achse 6a schwenken kann. In Fig. 1 sind demgemäß zwei Schwenkpositionen dargestellt. In einer davon, einer Betriebsstellung, ragt der Ausleger 6 so weit nach oben, dass er mit einem Blatt 4a des Rotors 4 kollidieren kann. Dies will die Erfindung vermeiden.

Dass Windenergieanlage und Kran auf derselben Plattform angeordnet sind, ist nicht zwingend, wenngleich die Vorteile der Erfindung hierbei besonders zur Geltung kommen. Denkbar ist aber auch eine unabhängige Anordnung von Windenergieanlage und Kran, jedoch in solcher Nähe, dass Kollisionsgefahr besteht.

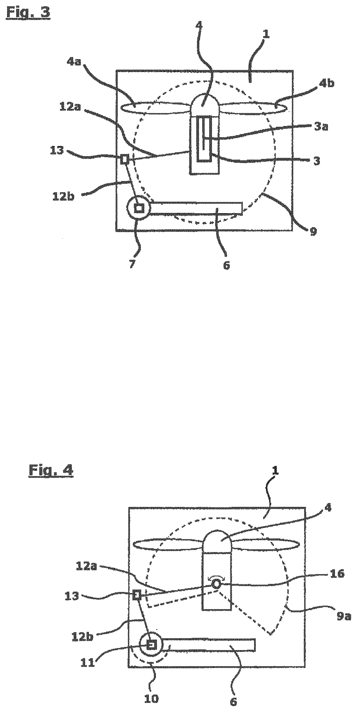

Fig. 3 zeigt von oben einen vollständigen Azimutbereich von 360° für die Winkelstellungen des Rotors 4, symbolisiert durch den umlaufenden gestrichelten Kreis 9. Der Kran befindet sich in diesem Fall in einem Parkmodus, d.h. der Ausleger 6 ist so weit nach unten geschwenkt, dass er von den Rotorblättern 4a, 4b und 4c nicht erreicht werden kann.

In Fig. 4 ist der Azimutbereich demgegenüber eingeschränkt, symbolisiert durch das gestrichelte Kreissegment 9a, das den Bereich veranschaulicht, in dem sich die Rotorblätter bewegen können. In diesem Fall kann der Ausleger 6 gefahrlos nach oben geschwenkt und ggf. auch in einem Winkelbereich von etwa 180° um eine vertikale Achse geschwenkt werden, symbolisiert durch den gestrichelten Halbkreis 10.

Anstelle des Lagers 3 und der Achse 3a für den Rotor 4 ist in Fig. 4 ein darunter angeordneter Drehantrieb 16 eingezeichnet, mit dem das Lager 3 samt Rotor 3 in verschiedene Winkelstellungen des Azimutbereichs gedreht werden kann.

Der Kran weist einen elektrischen Antrieb 11 auf, der von der Windenergieanlage versorgt wird. Mit 12a, 12b sind entsprechende Versorgungs- und Steuerleitungen gekennzeichnet.

Diese verlaufen über eine Steuerung 13, die ständig die Leistungsaufnahme des Krans prüft und im Fall eines Anstiegs, der auf eine Inbetriebnahme des Krans schließen lässt, den vollständigen Azimutbereich gemäß Fig. 3 auf den eingeschränkten gemäß Fig. 4 umstellt. Über die Leitung 12a kann die Steuerung 13 auch den Drehantrieb 16 ansteuern.

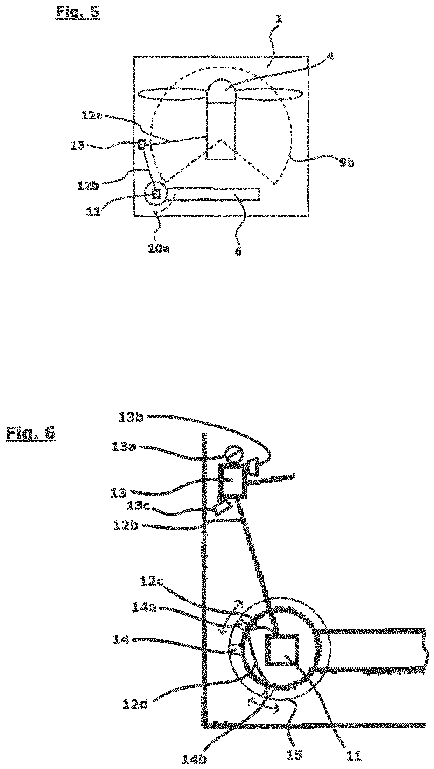

Fig. 5 zeigt einen Zweitbetriebsmodus für den Kran, in dem sein Bewegungsradius auf einen Viertelkreis 10a eingeschränkt ist, wodurch aber der Azimutbereich für die Windenergieanlage vergrößert ist, symbolisiert durch das größere Kreissegment 9b.

Wie in Fig. 6 dargestellt, kann die Steuerung 13 mit einer Windfahne 13a und/oder Kamera 13b ausgestattet sein. Die Windfahne 13a dient der Bestimmung der Windrichtung und kann auch auf dem Turm 2 angebracht sein. Sie kann ferner mit einem Anemometer zur Bestimmung der Windstärke kombiniert sein. Die Kamera 13b ist auf die Windenergieanlage gerichtet und dient der Bestimmung der aktuellen Winkelstellung des Rotors 4. Eine weitere Kamera 13c zielt auf den Kran, so dass die Steuerung 13 überprüfen kann, ob sich der Kran in einem Ruhe- oder in einem bestimmten Betriebsmodus befindet. Am schwenkbaren Krangehäuse ist ein Fortsatz 14 befestigt, der beim Schwenken an die Anschläge 14a und 14b anschlägt, wodurch die Schwenkbewegung des Krans begrenzt wird. Die Anschläge 14a und 14b sind entlang einer auf der Plattform 1 angeordneten, den Kran umlaufenden Schiene 15 beweglich. Sie weisen Antriebe auf, mit denen sie in die durch die eingezeichneten Doppelpfeile veranschaulichten Richtungen bewegt werden können. Die Antriebe werden von der Steuerung 13 angesteuert, was durch die Leitungen 12c, 12d symbolisiert ist. Die Steuerung 13 kann damit festlegen, in welchem Radius sich der Kran bewegen kann, also beispielsweise im Halbkreis 10 gemäß Fig. 4 oder im Viertelkreis 10a nach Fig. 5.

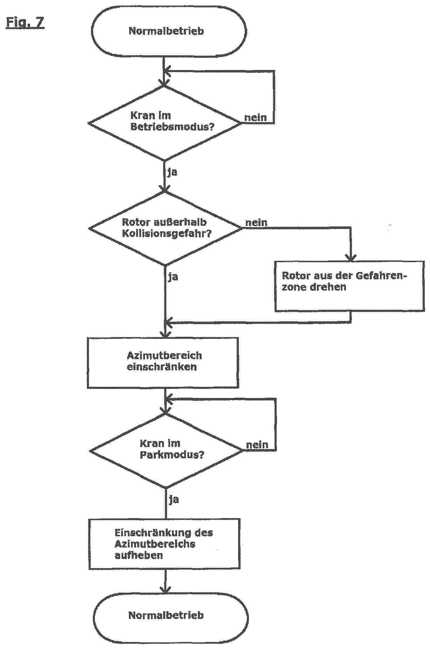

Gemäß dem in Fig. 7 gezeigten Ablaufdiagramm befindet sich die Vorrichtung zunächst im Normalbetrieb, d.h. der Kran befindet sich in einem Parkmodus und für die Windenergieanlage steht der vollständige Azimutbereich zur Verfügung. In einer Warteschleife wird dann ständig überprüft, ob der Kran in einen Betriebsmodus gelangt. Dies kann durch Überwachung der über die Leitung 12b in den Kranantrieb 11 eingespeiste Leistung, durch eine Schnittstelle zur Kransteuerung oder durch Überwachung des Krans mittels der Kamera 13c geschehen. Wird ein Betriebsmodus am Kran festgestellt, erfolgt eine automatische Prüfung, ob die Winkelstellung des Rotors 4 so ist, dass Kollisionsgefahr besteht. Ist das der Fall, so wird der Rotor 4 mittels des Antriebs 16 aus der Gefahrenzone gedreht. Anschließend wird der Azimutbereich so eingeschränkt, dass für sämtliche Betriebsstellungen des Betriebsmodus Kollisionen zwischen Rotor 4 und Kran ausgeschlossen sind. In einer anschließenden Warteschleife wird abgewartet, bis der Kran wieder in einen Parkmodus gelangt. Dies kann durch Leistungsabfall an der Leitung 12b, über eine Schnittstelle oder mittels der Kamera 13c überwacht werden. Ist ein Parkmodus erreicht, wird die Einschränkung des Azimutbereichs aufgehoben, und der Normalbetrieb kann fortgesetzt werden.

## Patentansprüche

1. Vorrichtung mit
- einer Windenergieanlage umfassend einen Turm (2), an dessen oberem Ende ein Lager (3) für einen um eine horizontale Achse (3a) drehbaren Rotor (4) mit mindestens einem Rotorblatt (4a, 4b, 4c) angeordnet ist, wobei das Lager (3) mit dem Rotor (4) um eine vertikale Achse (5) in verschiedene Winkelstellungen innerhalb eines vollständigen Azimutbereichs (9) drehbar ist,
- einem Kran, der einen Parkmodus einnehmen kann, in dem der Rotor (4) in jeder Winkelstellung des vollständigen Azimutbereichs (9) nicht mit dem Kran kollidieren kann, der aber auch in einen Betriebsmodus gelangen kann, der einen Bereich von Betriebsstellungen umfasst, unter denen zumindest eine Kollisionsstellung ist, in der der Kran mit dem Rotor (4) in zumindest einer Winkelstellung des vollständigen Azimutbereichs (9) kollidieren kann, und
- einer Sicherungseinrichtung zur Verhinderung von Kollisionen zwischen Rotor (4) und Kran im Betriebsmodus,
**dadurch gekennzeichnet, dass** die Sicherungseinrichtung eine Steuerung (13) umfasst, die eingerichtet ist, den Azimutbereich der Windenergieanlage einzuschränken, wenn der Kran vom Parkmodus in den Betriebsmodus gelangt.

2. Vorrichtung nach Anspruch 1, **dadurch gekennzeichnet, dass** der eingeschränkte Azimutbereich (9a) so bemessen ist, dass es in keiner der Betriebsstellungen des Krans in dem Betriebsmodus zu einer Kollision mit dem Rotor (4) kommen kann.

3. Vorrichtung nach einem der vorstehenden Ansprüche, **dadurch gekennzeichnet, dass** die Steuerung (13) eingerichtet ist, zu prüfen, ob der Kran in einen Betriebsmodus gelangt, wobei vorzugsweise der Kran für seinen Betrieb mindestens einen elektrischen Antrieb (11) aufweist und die Steuerung (13) eingerichtet ist, die Prüfung, ob der Kran in den Betriebsmodus gelangt, anhand eines elektrischen Parameters des elektrischen Antriebs (11) vorzunehmen.

4. Vorrichtung nach einem der vorstehenden Ansprüche, **dadurch gekennzeichnet, dass** der Kran für seinen Betrieb mindestens einen elektrischen Antrieb (11) aufweist und die elektrische Energie zum Betrieb des elektrischen Antriebs (11) von der Windenergieanlage stammt.

5. Vorrichtung nach einem der vorstehenden Ansprüche, **dadurch gekennzeichnet, dass** die Steuerung (13) eingerichtet ist, die Einschränkung des Azimutbereichs aufzuheben, wenn der Kran in einen Parkmodus gelangt.

6. Vorrichtung nach einem der vorstehenden Ansprüche, **dadurch gekennzeichnet, dass** für den Kran ein Zweitbetriebsmodus vorgesehen ist, der einen Bereich von Zweitbetriebsstellungen umfasst, unter denen zumindest eine Zweitkollisionsstellung ist, die sich von sämtlichen Betriebsstellungen des ersten Betriebsmodus unterscheidet und bei der der Kran mit dem Rotor in zumindest einer Winkelstellung des vollständigen Azimutbereichs (9) kollidieren kann, und die Steuerung (13) eingerichtet ist, den Azimutbereich, wenn der Kran in den Zweitbetriebsmodus gelangt, gegenüber dem vollständigen Azimutbereich (9) so einzuschränken, dass es in keiner möglichen Zweitbetriebsstellung des Krans in dem Zweitbetriebsmodus zu einer Kollision mit dem Rotor (4) kommen kann.

7. Vorrichtung nach einem der vorstehenden Ansprüche, **dadurch gekennzeichnet, dass** die Steuerung (13) eingerichtet ist, die Winkelstellung des Rotors (4) im vollständigen (9) oder einem eingeschränkten (9a) Azimutbereich zu erfassen und in Abhängigkeit davon das Umschalten des Krans in einen Betriebsmodus, für den es zumindest eine Kollisionsstellung mit der erfassten Winkelstellung gibt, zu unterbinden, wobei vorzugsweise die Windenergieanlage einen Drehantrieb (16) zum Drehen des Rotors (4) in eine bestimmte Winkelstellung innerhalb des vollständigen (9) oder eines eingeschränkten (9a) Azimutbereichs aufweist und die Steuerung (13) weiter eingerichtet ist, während des Unterbindens des Umschaltens des Krans in den Betriebsmodus mit der Kollisionsstellung den Rotor (4) mittels des Drehantriebs (16) in eine Winkelstellung zu drehen, die innerhalb eines Azimutbereichs liegt, in dem Kollisionen mit dem Kran in dem Betriebsmodus ausgeschlossen sind, wobei vorzugsweise die Steuerung (13) ferner eingerichtet ist, nach dem Drehen des Rotors (4) in die Winkelstellung den Azimutbereich so einzuschränken, dass es in keiner der Betriebsstellungen des Krans in dem Betriebsmodus zu einer Kollision mit dem Rotor (4) kommen kann, und die Unterbindung des Umschaltens des Krans in den Betriebsmodus aufzuheben.

8. Vorrichtung nach einem der vorstehenden Ansprüche, **dadurch gekennzeichnet, dass** die Sicherungseinrichtung Begrenzungsmittel (14, 14a, 14b) zum Einschränken der Bewegungsfreiheit des Krans umfasst, so dass dieser nur in einem bestimmten von mehreren Betriebsmodi betrieben werden kann, und Mittel (13a) zur Bestimmung einer bevorzugten Winkelstellung des Rotors (4) im Azimutbereich sowie eine Einstelleinrichtung (12b, 12c, 12d, 15) zur Einstellung der Begrenzungsmittel (14, 14a, 14b) in Abhängigkeit von der bevorzugten Winkelstellung vorgesehen sind.

9. Verfahren zum Betrieb einer Windenergieanlage und eines Krans,
- wobei die Windenergieanlage einen um eine horizontale Achse (3a) drehbaren Rotor (4) mit mindestens einem Rotorblatt (4a, 4b, 4c) umfasst, welcher außerdem um eine vertikale Achse (5) in verschiedene Winkelstellungen innerhalb eines vollständigen Azimutbereichs (9) drehbar ist, und
- der Kran in einem Betriebsmodus betrieben wird, der einen Bereich von Betriebsstellungen umfasst, unter denen zumindest eine Kollisionsstellung ist, in der der Kran mit dem Rotor (4) in zumindest einer Winkelstellung des vollständigen Azimutbereichs (9) kollidieren kann,
**dadurch gekennzeichnet, dass** der Azimutbereich beim Eintritt des Krans in den Betriebsmodus eingeschränkt wird.

10. Verfahren nach Anspruch 9, **dadurch gekennzeichnet, dass** der eingeschränkte Azimutbereich derart bemessen ist, dass es in keiner der Betriebsstellungen des Krans in dem Betriebsmodus zu einer Kollision mit dem Rotor (4) kommen kann, wobei vorzugsweise die Einschränkung des Azimutbereichs aufgehoben wird, wenn der Kran in einen Parkmodus gelangt.

11. Verfahren nach Anspruch 9 oder 10, d**adurch gekennzeichnet, dass** geprüft wird, ob der Kran in den Betriebsmodus gelangt, wobei vorzugsweise anhand eines elektrischen Parameters eines elektrischen Antriebs (11) des Krans geprüft wird, ob der Kran in den Betriebsmodus gelangt.

12. Verfahren nach einem der vorstehenden Ansprüche 9 bis 11, **dadurch gekennzeichnet, dass** elektrische Energie zum Betrieb des Krans der Windenergieanlage entnommen wird.

13. Verfahren nach einem der vorstehenden Ansprüche 9 bis 12, **dadurch gekennzeichnet, dass** für den Kran ein Zweitbetriebsmodus vorgesehen ist, der einen Bereich von Zweitbetriebsstellungen umfasst, unter denen zumindest eine Zweitkollisionsstellung ist, die sich von sämtlichen Betriebsstellungen des ersten Betriebsmodus unterscheidet und bei der der Kran mit dem Rotor (4) in zumindest einer Winkelstellung des vollständigen Azimutbereichs kollidieren kann, und beim Eintritt in den Zweitbetriebsmodus der Azimutbereich gegenüber dem vollständigen Azimutbereich (9) so eingeschränkt wird, dass es in keiner möglichen Zweitbetriebsstellung des Krans in dem Zweitbetriebsmodus zu einer Kollision mit dem Rotor (4) kommen kann.

14. Verfahren nach einem der vorstehenden Ansprüche 9 bis 13, **dadurch gekennzeichnet, dass** die Winkelstellung des Rotors (4) im vollständigen (9) oder einem eingeschränkten (9a) Azimutbereich erfasst wird und in Abhängigkeit davon das Umschalten des Krans in einen Betriebsmodus, für den es zumindest eine Kollisionsstellung mit der erfassten Winkelstellung gibt, unterbunden wird, wobei vorzugsweise der Rotor (4) während des Unterbindens des Umschaltens des Krans in den Betriebsmodus mit der Kollisionsstellung in eine Winkelstellung gedreht wird, die innerhalb eines Azimutbereichs liegt, in dem Kollisionen mit dem Kran in dem Betriebsmodus ausgeschlossen sind, wobei vorzugsweise nach dem Drehen des Rotors (4) in die Winkelstellung der Azimutbereich so eingeschränkt wird, dass es in keiner der Betriebsstellungen des Krans in dem Betriebsmodus zu einer Kollision mit dem Rotor (4) kommen kann, und die Unterbindung des Umschaltens des Krans in den Betriebsmodus aufgehoben wird.

15. Verfahren nach einem der vorstehenden Ansprüche 9 bis 14, **dadurch gekennzeichnet, dass** die Bewegungsfreiheit des Krans in Abhängigkeit von einer bevorzugten Winkelstellung des Rotors (4) im Azimutbereich eingeschränkt wird, so dass dieser nur in einem bestimmten von mehreren Betriebsmodi betrieben werden kann.

## Claims

1. Apparatus comprising
- a wind turbine comprising a tower (2), at the upper end of which a bearing (3) is arranged for a rotor (4), which is rotatable about a horizontal axis (3a) and has at least one rotor blade (4a, 4b, 4c), the bearing (3) with the rotor (4) being rotatable about a vertical axis (5) into various angular positions within a complete azimuthal range (9),
- a crane, which can assume a parking mode, in which the rotor (4) cannot collide with the crane in any angular position of the complete azimuthal range (9), which however can also go into an operating mode, comprises a range of operating positions among which there is at least one collision position, in which the crane can collide with the rotor (4) in at least one angular position of the complete azimuthal range (9), and
- a safety device for preventing collisions between the rotor (4) and the crane in the operating mode,
**characterized in that** the safety device comprises a controller (13), which is designed to restrict the azimuthal range of the wind turbine when the crane goes from the parking mode into the operating mode.

2. Apparatus according to Claim 1, **characterized in that** the restricted azimuthal range (9a) is dimensioned such that a collision with the rotor (4) cannot occur in any of the operating positions of the crane in the operating mode.

3. Apparatus according to one of the preceding claims, **characterized in that** the controller (13) is designed to check whether the crane goes into an operating mode, the crane preferably having for its operation at least one electrical drive (11) and the controller (13) being designed to perform the check whether the crane goes into the operating mode on the basis of an electrical parameter of the electrical drive (11).

4. Apparatus according to one of the preceding claims, **characterized in that** the crane has for its operation at least one electrical drive (11) and the electrical energy for the operation of the electrical drive (11) originates from the wind turbine.

5. Apparatus according to one of the preceding claims, **characterized in that** the controller (13) is designed to relinquish the restriction of the azimuthal range when the crane goes into a parking mode.

6. Apparatus according to one of the preceding claims, **characterized in that** a second operating mode is provided for the crane, comprising a range of second operating positions, among which there is at least one second collision position, which differs from all the operating positions of the first operating mode and in which the crane can collide with the rotor in at least one angular position of the complete azimuthal range (9), and the controller (13) is designed to restrict the azimuthal range in comparison with the complete azimuthal range (9) when the crane goes into the second operating mode in such a way that a collision with the rotor (4) cannot occur in any possible second operating position of the crane in the second operating mode.

7. Apparatus according to one of the preceding claims, **characterized in that** the controller (13) is designed to detect the angular position of the rotor (4) in the complete azimuthal range (9) or a restricted azimuthal range (9a) and, in dependence thereon, to prevent the switching over of the crane into an operating mode for which there is at least one collision position with the detected angular position, the wind turbine preferably having a rotary drive (16) for turning the rotor (4) into a specific angular position within the complete azimuthal range (9) or a restricted azimuthal range (9a) and the controller (13) also being designed such that, while preventing the switching over of the crane into the operating mode with the collision position, it turns the rotor (4) by means of the rotary drive (16) into an angular position that lies within an azimuthal range in which collisions with the crane in the operating mode are ruled out, the controller (13) preferably also being designed such that after the turning of the rotor (4) into the angular position it restricts the azimuthal range in such a way that a collision with the rotor (4) cannot occur in any of the operating positions of the crane in the operating mode, and relinquishes the prevention of the switching over of the crane into the operating mode.

8. Apparatus according to one of the preceding claims, **characterized in that** the safety device comprises limiting means (14, 14a, 14b) for restricting the freedom of movement of the crane, so that the latter can only be operated in one specific mode of a number of operating modes, and means (13a) are provided for determining a preferred angular position of the rotor (4) in the azimuthal range and also a setting device (12b, 12c, 12d, 15) for setting the limiting means (14, 14a, 14b) in dependence on the preferred angular position.

9. Method for operating a wind turbine and a crane,
- the wind turbine comprising a rotor (4), which is rotatable about a horizontal axis (3a) and has at least one rotor blade (4a, 4b, 4c), which is also rotatable about a vertical axis (5) into various angular positions within a complete azimuthal range (9), and
- the crane is operated in an operating mode, which comprises a range of operating positions among which there is at least one collision position, in which the crane can collide with the rotor (4) in at least one angular position of the complete azimuthal range (9),
**characterized in that** the azimuthal range is restricted when the crane enters the operating mode.

10. Method according to Claim 9, **characterized in that** the restricted azimuthal range is dimensioned such that a collision with the rotor (4) cannot occur in any of the operating positions of the crane in the operating mode, the restriction of the azimuthal range preferably being relinquished when the crane goes into a parking mode.

11. Method according to Claim 9 or 10, **characterized in that** it is checked whether the crane goes into the operating mode, it preferably being checked whether the crane goes into the operating mode on the basis of an electrical parameter of an electrical drive (11) of the crane.

12. Method according to one of the preceding Claims 9 to 11,
**characterized in that** electrical energy for operating the crane is taken from the wind turbine.

13. Method according to one of the preceding Claims 9 to 12,
**characterized in that** a second operating mode is provided for the crane, comprising a range of second operating positions, among which there is at least one second collision position, which differs from all the operating positions of the first operating mode and in which the crane can collide with the rotor (4) in at least one angular position of the complete azimuthal range, and when it enters the second operating mode the azimuthal range is restricted in comparison with the complete azimuthal range (9) in such a way that a collision with the rotor (4) cannot occur in any possible second operating position of the crane in the second operating mode.

14. Method according to one of the preceding Claims 9 to 13,
**characterized in that** the angular position of the rotor (4) in the complete azimuthal range (9) or a restricted azimuthal range (9a) is detected and, in dependence thereon, the switching over of the crane into an operating mode for which there is at least one collision position with the detected angular position is prevented, it preferably being provided that, while the switching over of the crane into the operating mode with the collision position is being prevented, the rotor (4) is turned into an angular position that lies within an azimuthal range in which collisions with the crane in the operating mode are ruled out, and preferably provided that after the turning of the rotor (4) into the angular position the azimuthal range is restricted in such a way that a collision with the rotor (4) cannot occur in any of the operating positions of the crane in the operating mode, and the prevention of the switching over of the crane into the operating mode is relinquished.

15. Method according to one of the preceding Claims 9 to 14,
**characterized in that** the freedom of movement of the crane is restricted in dependence on a preferred angular position of the rotor (4) in the azimuthal range, so that the latter can only be operated in one specific mode of a number of operating modes.

## Revendications

1. Dispositif comportant
- une éolienne comprenant une tour (2), à l'extrémité supérieure de laquelle est disposé un palier (3) pour un rotor (4) pouvant tourner autour d'un axe horizontal (3a) avec au moins une pale de rotor (4a, 4b, 4c), dans lequel le palier (3) avec le rotor (4) peut tourner autour d'un axe vertical (5) dans différentes positions angulaires à l'intérieur d'une plage azimutale totale (9),
- une grue, qui peut occuper un mode de parcage, dans lequel le rotor (4) ne peut pas entrer en collision avec la grue dans chaque position angulaire de la plage azimutale totale (9), mais qui peut aussi passer en mode de fonctionnement, qui comprend une zone de positions angulaires parmi lesquelles il existe au moins une position de collision, dans laquelle la grue peut entrer en collision avec le rotor (4) dans au moins une position angulaire de la plage azimutale totale (9), et
- un dispositif de sécurisation pour empêcher des collisions entre le rotor (4) et la grue dans le mode de fonctionnement,
**caractérisé en ce que** le dispositif de sécurisation comprend une commande (13), qui est conçue pour limiter la plage azimutale de l'éolienne, lorsque la grue passe du mode de parcage au mode de fonctionnement.

2. Dispositif selon la revendication 1, **caractérisé en ce que** la plage azimutale limitée (9a) est dimensionnée de telle manière qu'il ne puisse se produire une collision avec le rotor (4) dans aucune des positions de fonctionnement de la grue dans le mode de fonctionnement.

3. Dispositif selon l'une quelconque des revendications précédentes, **caractérisé en ce que** la commande (13) est conçue pour vérifier si la grue passe dans un mode de fonctionnement, dans lequel de préférence la grue présente pour son fonctionnement au moins un entraînement électrique (11) et la commande (13) est conçue pour vérifier si la grue passe dans le mode de fonctionnement, à l'aide d'un paramètre électrique de l'entraînement électrique (11).

4. Dispositif selon l'une quelconque des revendications précédentes, **caractérisé en ce que** la grue présente pour son fonctionnement au moins un entraînement électrique (11) et l'énergie électrique pour le fonctionnement de l'entraînement électrique (11) provient de l'éolienne.

5. Dispositif selon l'une quelconque des revendications précédentes, **caractérisé en ce que** la commande (13) est conçue pour lever la limitation de la plage azimutale, lorsque la grue passe dans un mode de parcage.

6. Dispositif selon l'une quelconque des revendications précédentes, **caractérisé en ce qu'**il est prévu pour la grue un second mode de fonctionnement, qui comprend une zone de secondes positions de fonctionnement, parmi lesquelles il existe au moins une seconde position de collision, qui se différencie de toutes les positions de fonctionnement du premier mode de fonctionnement et dans laquelle la grue peut entrer en collision avec le rotor (4) dans au moins une position angulaire de la plage azimutale totale (9), et la commande (13) est conçue pour limiter la plage azimutale par rapport à la plage azimutale totale (9), lorsque la grue passe dans le second mode de fonctionnement, de telle manière qu'il ne puisse se produire une collision avec le rotor (4) dans aucune seconde position de fonctionnement possible de la grue dans le second mode de fonctionnement.

7. Dispositif selon l'une quelconque des revendications précédentes, **caractérisé en ce que** la commande (13) est conçue pour détecter la position angulaire du rotor (4) dans la plage azimutale totale (9) ou dans une plage azimutale limitée (9a) et pour empêcher, en fonction de cela, la commutation de la grue dans un mode de fonctionnement, pour lequel il existe au moins une position de collision avec la position angulaire détectée, dans lequel de préférence l'éolienne présente un entraînement rotatif (16) pour faire tourner le rotor (4) dans une position angulaire déterminée à l'intérieur de la plage azimutale totale (9) ou d'une plage azimutale limitée (9a) et la commande (13) est en outre conçue pour faire tourner le rotor (4), pendant l'empêchement de la commutation de la grue dans le mode de fonctionnement dans la position de collision, au moyen de l'entraînement rotatif (16) dans une position angulaire qui est située à l'intérieur d'une plage azimutale dans laquelle des collisions avec la grue dans le mode de fonctionnement sont exclues, dans lequel de préférence la commande (13) est en outre conçue pour limiter la plage azimutale, après la rotation du rotor (4) dans la position angulaire, de telle manière qu'il ne puisse se produire une collision avec le rotor (4) dans aucune des positions de fonctionnement de la grue dans le mode de fonctionnement, et pour lever l'empêchement de la commutation de la grue dans le mode de fonctionnement.

8. Dispositif selon l'une quelconque des revendications précédentes, **caractérisé en ce que** le dispositif de sécurisation comprend des moyens de limitation (14, 14a, 14b) pour limiter la liberté de mouvement de la grue, de telle manière que celle-ci ne puisse fonctionner que dans un mode déterminé parmi plusieurs modes de fonctionnement, et il est prévu des moyens pour déterminer une position angulaire préférée du rotor (4) dans la plage azimutale ainsi qu'un dispositif de réglage (12b, 12c, 12d, 15) pour le réglage des moyens de limitation (14, 14a, 14b) en fonction de la position angulaire préférée.

9. Procédé de conduite d'une éolienne et d'une grue,
- dans lequel l'éolienne comprend un rotor (4) pouvant tourner autour d'un axe horizontal (3a) avec au moins une pale de rotor (4a, 4b, 4c), qui peut par ailleurs tourner autour d'un axe vertical (5) dans différentes positions angulaires à l'intérieur d'une plage azimutale totale (9), et
- on fait fonctionner la grue dans un mode de fonctionnement, qui comprend une zone de positions de fonctionnement, parmi lesquelles il existe au moins une position de collision, dans laquelle la grue peut entrer en collision avec le rotor (4) dans au moins une position angulaire de la plage azimutale totale (9),
**caractérisé en ce qu'**on limite la plage azimutale lors de l'entrée de la grue dans le mode de fonctionnement.

10. Procédé selon la revendication 9, **caractérisé en ce que** la plage azimutale limitée (9a) est dimensionnée de telle manière qu'il ne puisse se produire une collision avec le rotor (4) dans aucune des positions de fonctionnement de la grue dans le mode de fonctionnement, dans lequel de préférence on lève la limitation de la plage azimutale lorsque la grue passe dans un mode de parcage.

11. Procédé selon la revendication 9 ou 10, **caractérisé en ce que** l'on vérifie si la grue passe dans le mode de fonctionnement, dans lequel de préférence on vérifie à l'aide d'un paramètre électrique d'un entraînement électrique (11) de la grue, si la grue passe dans le mode de fonctionnement.

12. Procédé selon l'une quelconque des revendications précédentes 9 à 11, **caractérisé en ce que** l'on prélève à l'éolienne l'énergie électrique pour le fonctionnement de la grue.

13. Procédé selon l'une quelconque des revendications précédentes 9 à 12, **caractérisé en ce qu'**il est prévu pour la grue un second mode de fonctionnement, qui comprend une zone de secondes positions de fonctionnement, parmi lesquelles il existe au moins une seconde position de collision, qui se différencie de l'ensemble des positions de fonctionnement du premier mode de fonctionnement et dans laquelle la grue peut entrer en collision avec le rotor (4) dans au moins une position angulaire de la plage azimutale totale, et on limite la plage azimutale par rapport à la plage azimutale totale (9) lors de l'entrée dans le second mode de fonctionnement de telle manière qu'il ne puisse se produire une collision avec le rotor (4) dans aucune seconde position de fonctionnement possible de la grue dans le second mode de fonctionnement.

14. Procédé selon l'une quelconque des revendications précédentes 9 à 13, **caractérisé en ce que** l'on détecte la position angulaire du rotor (4) dans la plage azimutale totale (9) ou dans une plage azimutale limitée (9a) et on empêche, en fonction de cela, la commutation de la grue dans un mode de fonctionnement pour lequel il existe au moins une position de collision avec la position angulaire détectée, dans lequel de préférence on fait tourner le rotor (4), pendant l'empêchement de la commutation de la grue dans le mode de fonctionnement avec la position de collision, dans une position angulaire qui est située à l'intérieur d'une plage azimutale, dans laquelle des collisions avec la grue dans le mode de fonctionnement sont exclues, dans lequel de préférence, après la rotation du rotor (4) dans la position angulaire, on limite la plage azimutale de telle manière qu'il ne puisse se produire une collision avec le rotor (4) dans aucune des positions de fonctionnement de la grue dans le mode de fonctionnement, et on lève l'empêchement de la commutation de la grue dans le mode de fonctionnement.

15. Procédé selon l'une quelconque des revendications précédentes 9 à 14, **caractérisé en ce qu'**on limite la liberté de mouvement de la grue en fonction d'une position angulaire préférée du rotor (4) dans la plage azimutale, de telle manière que celle-ci ne puisse fonctionner que dans un mode déterminé parmi plusieurs modes de fonctionnement.
